Europäisches Patentamt

European Patent Office

Office européen des brevets

(19)

(11) Publication number: **0 297 175**
**A2**

## (12) EUROPEAN PATENT APPLICATION

(21) Application number: 87117501.4

(51) Int. Cl.⁴ **H02J 7/10**

(22) Date of filing: 26.11.87

(30) Priority: 30.06.87 JP 165020/87

(43) Date of publication of application:
**04.01.89 Bulletin 89/01**

(84) Designated Contracting States:
**DE FR GB**

(71) Applicant: **TORIO ELECTRONICS CO., LTD**
**1, Hasuike 3-chome Yanaizu-cho**
**Hashima-gun Gifu-ken(JP)**

(72) Inventor: **Nakagawa, Kiyoshi**
**555-35, Oaza Mazeguchi Matsuo**
**Sekigahara-cho**
**Fuwa-gun Gifu-ken(JP)**

(74) Representative: **Leyh, Hans, Dr.-Ing.**
**Patentanwälte Berendt, Leyh & Hering Innere**
**Wiener Strasse 20**
**D-8000 München 80(DE)**

(54) Battery charger.

(57) A battery charger comprising a power supply circuit which applies a dc voltage to a battery, a switching circuit between the power supply circuit and the battery connected which selects the polarity of the voltage applied to the battery, and a control circuit which detects the polarity of the battery from the remaining voltage of the battery and controls the switching circuit according to the detected polarity. The control circuit includes a pair of diodes connected in the opposite polarity to each other in parallel with the battery connected and one of them is turned on by the remaining voltage of the battery. The switching circuit includes relay coils which are connected in series with the diodes respectively and relay contacts which are driven by the relay coiles.

Fig. 1 (a)

## Battery Charger

### FIELD OF THE INVENTION

The present invention relates to a battery charger for charging discharged batteries.

### DESCRIPTION OF THE RELATED ART

This type of battery charger has predetermined positive and negative terminals to which a battery to be charged should be connected with the same terminal polarities. When charging a battery of a car, motorcycle, etc. using that type of battery charger, the user must carefully check its polarity to connect it to the battery charger with the correct polarity because the battery charger or the battery can be damaged by wrong connection.

### SUMMARY OF THE INVENTION

A primary object of this invention is to provide a battery charger to which a battery can be connected regardless of the polarity.

Another object of this invention is to provide a battery charger which can prevent the charger and battery from being damaged by wrong connection.

Yet another object of this invention is to provide a battery charger which can charge a battery without waste of power.

Further object of this invention is to provide a battery charger whose output terminals are separated from the power supply circuit when it is not used and are safe from short-circuits, etc. if the power switch is on.

The above objects are realized by the battery charger of this invention which comprises the following: a power supply circuit which applies a dc voltage to the battery connected, a switching circuit between the power supply circuit and the battery which selects the polarity of the voltage applied to the battery, and a control circuit which detects the polarity of the battery from its remaining voltage and controls the switching circuit according to the detected polarity.

The other objects of the present invention will become apparent from the following detailed description of the embodiments of the invention, and people skilled in this art can easily recognize many advantages of this invention not mentioned in this specification.

### BRIEF DESCRIPTION OF THE DRAWINGS

Figure 1a is a schematic diagram of the control circuit and other circuits comprised in the battery charger of the first embodiment of the invention.

Figure 1b is a shematic diagram of the power supply circuit of the first embodiment of the invention.

Figure 2 is a perspective view of an external appearance of the battery charger of the embodiments of the invention.

Figure 3 is a schematic diagram of the second embodiment of the invention.

### DETAILED DESCRIPTION OF THE PREFERRED EMBODIMENTS

(First Embodiment)

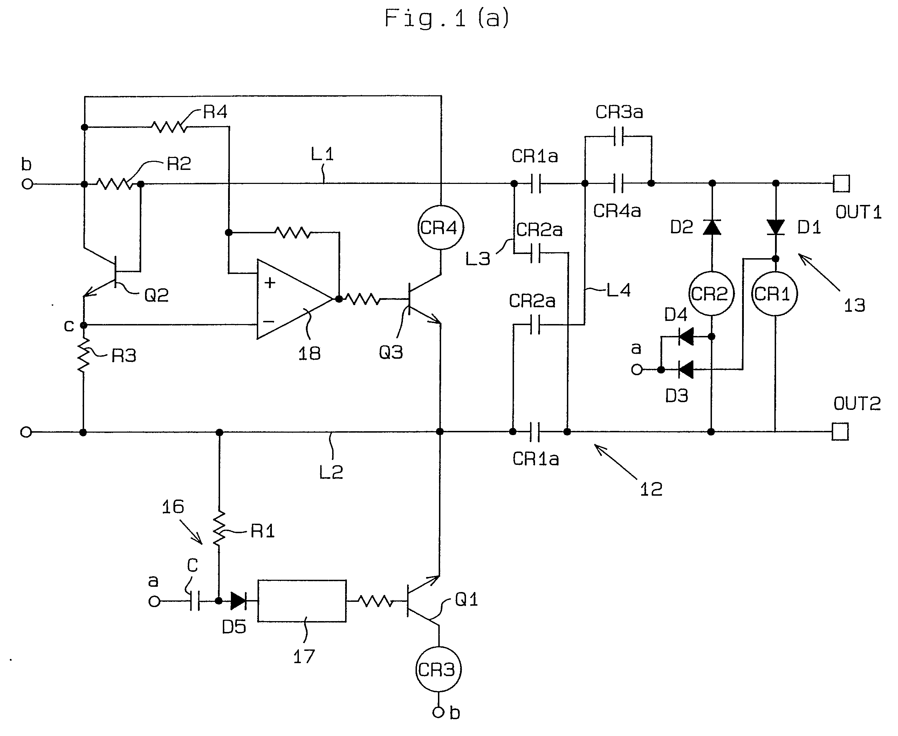

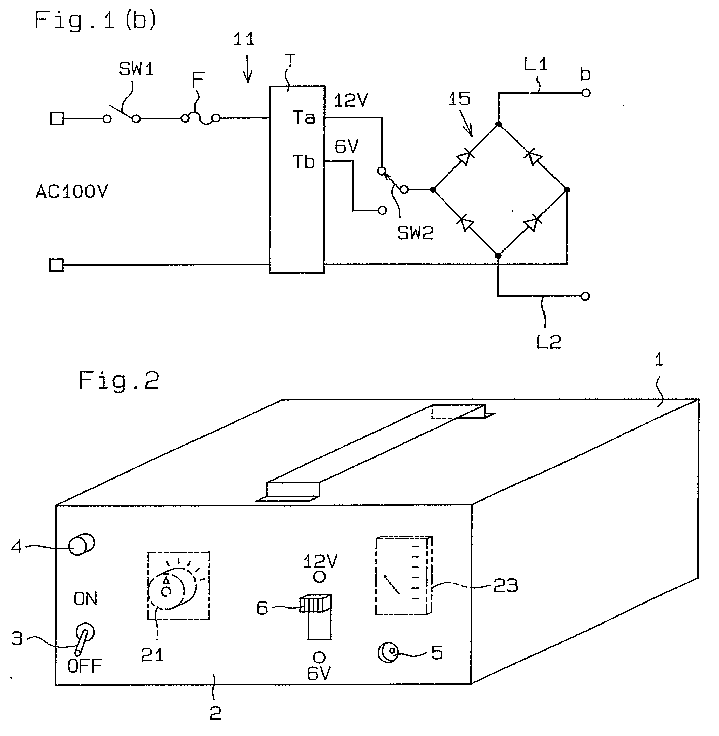

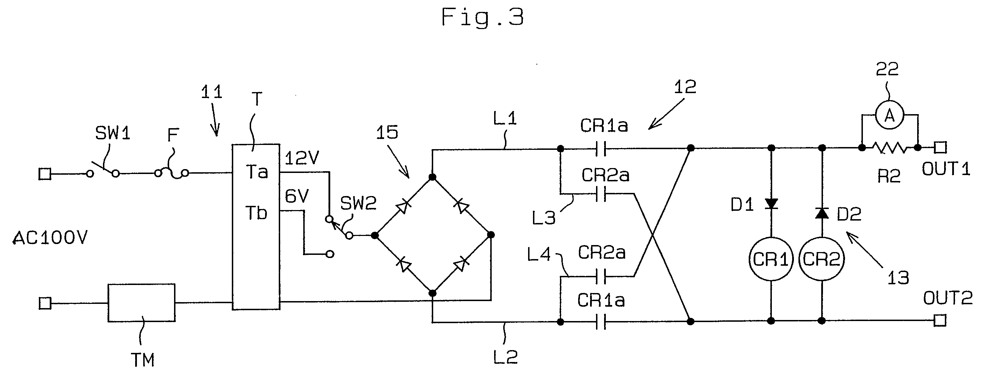

The first embodiment of the present invention is explained below using Figures 1 (a) and 1 (b) and Figure 2. The battery charger comprises a frame 1 formed in the shape of a box with a control panel 2 on one side. On the control panel 2 are arranged the lever 3 of the power switch SW1 and a lamp 4 which lights when the power is on, as well as a connector 5 to which a battery is connected using a cable and the slide 6 of the voltage selecting switch SW 2 for selecting the charging voltage according to the rated voltage of the battery connected.

The charging circuit in the frame 1 comprises a power supply circuit 11, switching circuit 12, and control circuit 13. The power circuit 11 comprises a transformer T and a rectifier 15. An AC voltage is applied to the primary winding of the transformer T via the power switch SW1 and a fuse F. The transformer T has output terminals Ta and Tb which output 12V ac and 6V ac, respectively; one of them is selectively connected to the rectifier 15 by the voltage selection switch SW2. The power supply line L1 and the ground line L2 from the rectifier 15 are connected to the output terminals OUT1 and OUT2 to which a battery is connected.

Closer to the output terminals OUT1 and OUT2, diodes D1 and D2 are connected between the lines L1 and L2 in parallel with each other. The anode of the diode D1 is connected to the line L1 while the anode of the diode D2 to the line L2.

When a battery is connected to the output terminals OUT1 and OUT2, the diode D1 or D2 is turned on by the remaining voltage of the battery according to the polarity of the voltage. These diodes D1 and D2 constitute the control circuit 13.

Relay coils CR1 and CR2 are connected in series to the ground line L2 sides of the diodes D1 and D2, respectively. The noramlly open relay contacts CR1a closed by the relay coil CR1 are inserted between the rectifier 15 and the diodes D1 and D2 on both lines L1 and L2. The noramlly open contacts CR2a closed by the relay coil CR2 are inserted on the lines L3 and L4 which cross-connect each side of the contacts CR1a on the line L1 to the opposite side of the contacts CR1a on the line L2. When the diode D1 or D2 conducts and a current flows through the relay coil CR1 or CR2, the contacts CR1a or CR2a close accordingly. The coils CR1 and CR2 and the corresponding relay contacts CR1a and Cr2a constitute the switching cirtuit 12.

The anode of a diode D3 is connected between the relay coil CR1 and diode D1, and that of a diode D4 is connected between the relay coil CR2 and the line L2. The cathodes of the diodes D3 and D4 are both connected to a differentiation circuite 16 including a capacitor C and a resistor R1. The differentiation circuit 16 triggers a monostable multivibrator 17 through a diode 5. The monostable multivibrator 17 turns a transistor Q1 on for a predetermined time duration.

A relay coil CR3 is connected between the collector of the transistor Q1 and the dc output b of the rectifier 15, and the corresponding normally open contacts CR3a are connected between the contacts CR1a and the diodes D1 and D2. When a battery is connected between the output terminals OUT1 and OUT2, the diode D1 or D2 conducts and a current flows through the diode D4 or D5. The current is differenciated by the differentiation circuit 16 and triggers the monostable multivibrator 17. The monostable multivibrator 17 turns the transistor Q1 on for a predetermined time duration. Conduction of the transistor Q1 allows a current to flow through the relay coil CR3. Thus the contacts CR3a close while the transistor Q1 is on.

A resistor 2 connected between the dc output b of the rectifier 15 and the contacts CR1a is the current detection resistor R2 for detecting the charging current. The collector and base of a transistor Q 2 are connected to each side of the resistor 2, the collector to the rectifier side and the base to the other side. The emitter of the transistor Q2 is connected to the line L2 via a resistor R3. The inverting input of an operational amplifier 18 (hereinafter referred to as amplifier) is connected to the emitter of the transistor Q2 and its non-inverting input is connected to the dc output side of the rectifier 15 via a resistor R4. The transistor Q2 is turned on and off by the voltage across the resistor R2.

The output of the amplifier 18 is connected to the base of a transistor Q3 whose emitter is connected to the line L2. The collector of the transistor Q3 is connected to the dc output side of the rectifier 15 via a relay coil CR4. The normally open contacts CR4a closed by the coil CR4 are inserted on the dc voltage line L1 in parallel with the contacts CR3a. When the transistor Q2 turns on, the voltage at the point c goes up. This makes the output voltage of the amplifier 18 rise to turn the transistor Q3 on. The transistor Q3, turned on, allows a current to flow through the coil CR4. Thus, the contacts CR4a are closed while the transistor Q2 is on. When the transistor Q2 turns off, the voltage at the point c goes low. This makes the output voltage of the amplifier 18 fall to turn the transistor Q3 off and the relay contacts CR4a open.

To charge a battery using the baterry charger described above, first the voltage selection switch SW2 is set to 6 V or 12V according to the rated voltage of a battery to be charged. The battery is then connected between the output terminals OUT1 and OUT2 regardless of the polarity. When the battery is connected to the output terminals with its positive terminal to OUT1 and its negative terminal to OUT2, for exmaple, the diode D1 is turned on by the remaining voltage of the battery and a current flows through the relay coil CR1 from the battery to close the contacts CR1a.

At the same time, the diode D3 conducts and a pulse from the differentiation circuit 16 triggers the monostable multivibarator 17, which turns on the transistor Q1 for a predetermined time. Conduction of the transistor Q1 allows a current to flow through the relay coil CR3 and the relay contacts CR3a close the circuit between the rectifer 15 and the battery.

In this state, the power switch SW1 is turned on so that the voltage, dropped by the transformer T and rectified by the rectifier 15, is applied to the battery via the power supply line L1, the charging current detection resistor R2, and the relay contacts CR1a and CR3a. This voltage charges the battery and keeps the relay contacts CR1a closed.

If the voltage across the resistor 2 is larger than a predetermined value, the transistor Q2 is turned on to close the relay contacts CR4a through the amplifier 18 and transistor Q3. Consequently, the circuit between the rectifier 15 and the battery remains closed when the transistor Q1 is turned off by the monostable multivibrator after a predetermined time and the relay contacts CR3a open.

When the charging current decreases below the predetermined value after the charging is completed, the transistor Q2 is turned off to open the relay contacts CR4a through the amplifier 18 and transistor Q3. This separates the power supply circuit 11 and the output terminals OUT1 and OUT2 to prevent waste of power.

When a battery is connected to the output terminals in the opposite polarity with its positive terminal to OUT2 and its negative terminal to OUT1, the diode D2 is turned on by the remaining voltage of the battery and a current flows through the relay coil CR2 from the battery to close the relay contacts CR2a. Consequently, the output terminal OUT1 is connected through a line L3 to the ground line L2 and the output terminal OUT2 through a line L4 to the power supply line L1 to match the polarity of the output voltage with that of the battery. The following operation of the circuit is the same as described above.

Since this battery charger detects the voltage polarity of the battery connected to the output terminals OUT1 and OUT2 by means of the diodes D1 and D2 and switches the polarity of the output voltage automatically as explained above, the user can connect a battery regardless of the voltage polarity. It can also prevent the battery or the charging circuit from being damaged by wrong connection. Further, as the output terminals OUT1 and OUT2 are separated from the power supply circuit 11 by the normally open relay contacts CR1a, CR2a, CR3a, and CR4a and no voltage is present there if the power switch SW1 is on, the charging circuit is safe from short-circuits on the cable, etc.

(Second Enbodiment)

The second embodiment of this invention is described below mainly on the differences from the first embodiment using Figure 3. With this embodiment, a timer TM is connected to the primary side of the transformer T. The setting knob 21 of the timer TM is located at the position indicated in a chain line on the control panel 1 as shown in Figure 2. The current detection resistor R2 is connected between the relay contacts CR1a and the output terminal OUT1, and an amperemeter 22 is connected to the resistor R2. An indicator 23 of the amperemeter 22 is located at the position indicated in a chain line on the control panel 1 as shown in Figure 2.

To use the battery charger of this second embodiment, the charging time is set on the timer TM with the setting knob 21, a battery is connected between the output terminals OUT1 and OUT2, and then the power switch SW1 is turned on. The polarity of the battery is detected by the diode D1 and D2 in the same manner as with the first embodiment, and the relay contacts CR1a or CR2a are closed according to the polarity of the battery.

The progress of the charging is indicated by the indicator 23 of the amperemeter 22 on the control panel 1. When charging is completed, the needle indicates the zero reading. Then, the battery is separated from the charger.

As understood from the above explantion, the second embodiment of the invention also has the same features of the first embodiment. In addition to them, the progress of charging is indicated by the amperemeter 22.

Obviously many modifications and variations of the present invention are possible without departure from the spirit and scope of the present invention. For example, more than one batteries can be charged at the same time by installing an appropriate number of charging circuits shown in Figure 1a in a frame.

Therefore, this invention is not limited to the embodiments described above but may be practiced otherwise within the scope of the claims.

## Claims

1. In a battery charger comprising a power supply circuit (11) for applying a dc voltage to a battery, the improvement comprising;
a switching circuit (12) between the power supply circuit (11) and the battery connected which selects the polarity of the voltage applied to the battery and
a control circuit (13) which detects the polarity of the battery from the remaining voltage of the battery and controls the switching circuit (12) according to the detected polarity.

2. A battery charger according to claim 1, wherein the control circuit (13) includes a pair of diodes (D1, D2) connected in the opposite polarity to each other in parallel with the battery and one of the diodes (D1, D2) is turned on by the remaining voltage of the battery.

3. A battery charger according to claim 2, wherein the switching circuit (12) includes a pair of relay coils (CR1, CR2) which is connected in series with the diodes (D1, D2) respectively and relay contacts (CR1a, CR2a) which are driven by the relay coiles (CR1, CR2).

4. A battery charger according to claim 1, wherein the control circuit (13) includes
a relay coil (CR3),
relay contacts (CR3a) which are driven by the relay coil (CR3) to close the circuit from the power supply circuit (11) to the battery connected, and
a circuit which allows a current to flow through the relay coil (CR3) for a predetermined time after the battery is connected.

5. A battery charger according to claim 1, wherein the control circuit (13) includes

a resistor (R2) connected between the power supply circuit (11) and the battery,

a relay coil (CR4),

relay contacts (CR4a) which are driven to close the circuit from the power supply circuit (11) to the battery, and

a circuit which allows a current to flow through the relay coil (CR4) according to the charging current.

6. A battery charger according to claim 1, wherein the control circuit (13) includes

a first relay coil (CR3),

a first relay contacts (CR3a) which are driven by the first relay coil (CR3) to close the circuit from the power supply circuit (11) to the battery connected,

a first circuit which allows a current to flow through the first relay coil (CR3) for a predetermined time after the battery is connected,

a resistor (R2) connected between the power supply circuit (11) and the battery to detect the charging current,

a second relay coil (CR4),

a second relay contacts (CR4a) which are driven by the second relay coil (CR4) to close the circuit from the power supply circuit (11) to the battery, and

a second circuit which allows a current to flow through the second relay coil (CR4) according to the charging current.

# Fig.1(a)

EP 0 297 175 A2

Fig.1 (b)

Fig.2

Fig.3